(19) Europäisches Patentamt / European Patent Office / Office européen des brevets

(11) **EP 3 193 533 A1**

(12) **EUROPEAN PATENT APPLICATION**
published in accordance with Art. 153(4) EPC

(43) Date of publication:
**19.07.2017 Bulletin 2017/29**

(51) Int Cl.:
*H04W 36/32* (2009.01)      *H04W 16/32* (2009.01)
*H04W 92/20* (2009.01)

(21) Application number: **15839630.9**

(22) Date of filing: **08.09.2015**

(86) International application number:
**PCT/JP2015/004544**

(87) International publication number:
**WO 2016/038879 (17.03.2016 Gazette 2016/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **10.09.2014 JP 2014184036**

(71) Applicant: **NEC Corporation**
**Tokyo 108-8001 (JP)**

(72) Inventor: **WATANABE, Yoshinori**
**Tokyo 108-8001 (JP)**

(74) Representative: **MacDougall, Alan John Shaw**
**Mathys & Squire LLP**
**The Shard**
**32 London Bridge Street**
**London SE1 9SG (GB)**

(54) **RADIO COMMUNICATION SYSTEM, BASE STATION, COMMUNICATION METHOD, AND STORAGE MEDIUM**

(57) A radio communication system for suppressing interference from a small cell to a mobile terminal the handover of which is suppressed, the communication system includes: a mobile terminal; a first cell; a second cell; a handover suppression unit configured to suppresses, based on a terminal type determined in accordance with a speed of movement of the mobile terminal and a cell type of the first cell and a cell type of the second cell, handover of the mobile terminal from the first cell to the second cell; and an interference suppression unit configured to suppresses interference from the second cell to the mobile terminal for which the handover is suppressed.

Fig.1

## Description

[Technical Field]

The present disclosure relates to a radio communication system, a base station, a communication method and a storage medium.

[Background Art]

When a mobile terminal in a radio communication system moves from a cell to which the mobile terminal is connected (a source cell) to another cell, the mobile terminal performs a process, called handover, for switching a cell to be connected, to continue communication. To accomplish the handover of the mobile terminal, the base station that manages the source cell instructs the mobile terminal to send a measurement report when a certain event has occurred. The certain event may be, for example, a degradation of the radio quality of the source cell. A measurement report generated by the mobile terminal includes the results of measurements of the radio quality of the source cell and its neighboring cells. Upon receipt of a measurement report from the mobile terminal, the base station of the source cell determines a cell to which the radio link connection is to be switched (the target cell) based on the measurement report and starts a handover procedure, including signaling with the mobile terminal and the target cell.

NPL 1 discloses one of measurement report transmission events concerning Long Term Evolution (LTE) or Evolved UTRAN (E-UTRAN). In NPL 1, the essential part of a report event specified as Event A3 (Neighbor becomes offset better than serving) can be expressed by the following Formula (1).

$$PS + OS < PT + OT \qquad (1)$$

where PS is the result of measurement of the radio quality of the source cell and PT is the result of measurements of the radio quality of neighboring cells. In LTE, PS and PT are the Reference Signal Received Power (RSRP) of a downlink reference signal or the Reference Signal Received Quality (RSRQ). RSRQ is the ratio of RSRP to the Received Signal Strength indicator (RSSI).

OS in Formula (1) is an offset value affecting the radio quality of a downlink reference signal of the source cell and is an HO parameter commonly called a3-offset (or hysteresis). On the other hand, OT in Formula (1) is an offset value that affects the radio quality of downlink reference signals of neighboring cells and is an HO parameter commonly called Cell Individual Offset (CIO). CIO (i.e. OT) may be set to different values for different neighboring cells. CIO is included in a neighbor list (also referred to as a neighboring cell list) which is provided from a base station to a mobile terminal connected to the cell managed by the base station.

When an operating condition written as Formula (1) is set in a base station, the operating condition written as Formula (1) is provided to a mobile terminal connected to the cell managed by the base station. When a time period during which the condition in Formula (1) is satisfied continues beyond a time period specified as Time to Trigger (TTT), the mobile terminal sends a measurement report to the base station that manages the source cell. Upon receipt of the measurement report from the mobile terminal, the base station determines a target cell on the basis of the measurement report and starts handover to the target cell.

In this case, if the start of the handover is too late, the radio quality of the source cell may decrease below a required quality before completion of the handover to the target cell and abnormal disconnection (Too Late HO) of communication may occur. On the other hand, if the start of the handover is too early, unnecessary handover (ping-pong HO) may occur in which immediately after completion of the handover to the target cell, Formula (1) is satisfied again and the traffic returns to the source cell.

It is known that such abnormal disconnection and unnecessary HO tend to occur when a fast-moving terminal passes through a microcell in an environment in which microcells coexist with macrocells. As a technique for mitigating the problem, a method for suppressing HO to a microcell by a fast-moving terminal connected to a macrocell is known.

For example, in NPL 2, HO of a mobile terminal to a microcell is suppressed until the terminal stays beyond a predetermined time in the coverage of the microcell. This reduces unnecessary HO and call disconnection when a fast-moving terminal passes through a microcell in an environment in which microcells coexist with macrocells.

PTL 1 discloses a technique for suppressing unnecessary location registration which can occur when a fast-moving mobile terminal passes through a small cell.

In PTL 2, in order to reduce handover failures which can occur when a mobile terminal passes through a femto cell, a microcell requests the femto cell not to use some subframes. Such a subframe is referred to as Almost Blank Subframe (ABS) and the femto cell that has received the request sets ABS.

[Citation List]

[Patent Literature]

PTL 1: International Publication No. 2014/034089
PTL 2: International Publication No. 2013/111889

[Non Patent Literature]

NPL 1: TS 36. 331 ((3GPP TS 36.331 V9.3.0 (2010-06), Evolved Universal Terrestrial Radio Access (E-UTRA); Radio Resource Control (RRC); Protocol specification)
NPL 2: K. Ivano, G. Spring (Siemens AG), "Mobile Speed Sensitive Handover in a Mixed Cell Environment", IEEE VTC 1995, pp. 892-896, 1995.

[Summary of Invention]

[Technical Problem]

However, the prior art literatures cited above do not disclose suppression of interference from a small cell to a mobile terminal for which handover is suppressed. Therefore, interference from a small cell may not be reduced when a fast-moving terminal connected to a macrocell passes through the small cell, for example.

Therefore, one of the objects of exemplary embodiments is to provide a radio communication system, a base station, a communication method and a storage medium that are capable of suppressing interference from a small cell to a mobile terminal for which handover is suppressed.

It should be noted that the object is merely one of a plurality of objects that exemplary embodiments disclosed herein attempt to achieve. Other objects or issues and novel features will be apparent from descriptions herein or the accompanying drawings.

[Solution to Problem]

A radio communication system of an exemplary embodiment includes a mobile terminal, a first cell, and a second cell. The radio communication system includes a handover suppression unit which, on the basis of the terminal type determined in accordance with a difference in the speed of movement of the mobile terminal and the cell types of the first cell and the second cell, suppresses handover of the mobile terminal from the first cell to the second cell. The radio communication system further includes an interference suppression unit which suppresses interference from the second cell to the mobile terminal for which the handover is suppressed.

A base station according to another exemplary embodiment is a base station of a radio communication system including a mobile terminal, a first cell and a second cell. The base station includes a handover suppression unit which, on the basis of the speed of movement of the mobile terminal and the cell types of the first cell and the second cell, suppresses handover of the mobile terminal from the first cell to the second cell, and an interference suppression unit which suppresses interference from the second cell to the mobile terminal for which the handover is suppressed.

A communication method according to another exemplary embodiment is a communication method for a radio communication system including a mobile terminal, a first cell and a second cell, wherein handover of the mobile terminal from the first cell to the second cell is suppressed on the basis of the speed of movement of the mobile terminal and the cell types of the first cell and the second cell, and interference from the second cell to the mobile terminal for which the handover is suppressed.

A storage medium according to another exemplary embodiment stores a program for causing a computer to execute a communication method for a base station configured to be capable of communicating with a mobile terminal. The program causes the computer to execute the steps of: suppressing, on the basis of the speed of movement of the mobile terminal and the cell types of the first cell and the second cell, handover of the mobile terminal from the first cell to the second cell; and suppressing interference from the second cell to the mobile terminal for which the handover is suppressed.

[Advantageous Effects of Invention]

According to the present disclosure, interference from a small cell to a mobile terminal for which handover is suppressed can be suppressed.

[Brief Description of Drawings]

[Fig. 1] Fig. 1 illustrates a related art according to exemplary embodiments of the present disclosure.
[Fig. 2] Fig. 2 is a diagram schematically illustrating an exemplary configuration of a radio communication system according to the disclosed embodiments.
[Fig. 3] Fig. 3 is a diagram illustrating a radio communication system according to a first exemplary embodiment.
[Fig. 4] Fig. 4 is a diagram illustrating a configuration of the first exemplary embodiment.
[Fig. 5] Fig. 5 is a diagram illustrating a frame configuration of the first exemplary embodiment.
[Fig. 6] Fig. 6 is a diagram illustrating operations according to the first exemplary embodiment.
[Fig. 7] Fig. 7 is a diagram illustrating a method for identifying a fast-moving terminal according to the first exemplary embodiment.
[Fig. 8] Fig. 8 is a diagram illustrating a configuration of a second exemplary embodiment.
[Fig. 9] Fig. 9 is a diagram illustrating operations according to the second exemplary embodiment.
[Fig. 10] Fig. 10 is a diagram illustrating a configuration of a third exemplary embodiment.
[Fig. 11] Fig. 11 is a diagram illustrating a configuration of a fourth exemplary embodiment.
[Fig. 12] Fig. 12 is a diagram illustrating a configuration of a fifth exemplary embodiment.
[Fig. 13] Fig. 13 is a diagram illustrating a configuration of a sixth exemplary embodiment.

[Description of Embodiments]

Exemplary embodiments will be described in detail below with reference to the accompanying drawings. Identical or corresponding elements are given identical reference numerals throughout the drawings and repeated description thereof will be omitted as necessary for clarification of explanation. Exemplary embodiments described below may be implemented independently or may be implemented in combination as appropriate.

Further, in the descriptions herein and drawings, some components that have substantially identical functional configurations are given identical reference numerals with different appended alphabetical characters after the numerals to distinguish between the components. For example, components having substantially identical functional configurations are distinguished as necessary, like mobile terminals 20A, 20B and 20C. However, if a plurality of components that have substantially identical functional configurations do not need to be particularly distinguished, only identical reference numerals are given. For example, if mobile terminals 20A, 20B and 20C do not need to be particularly distinguished from one another, they are simply referred to as mobile terminals 20.

<Introduction>

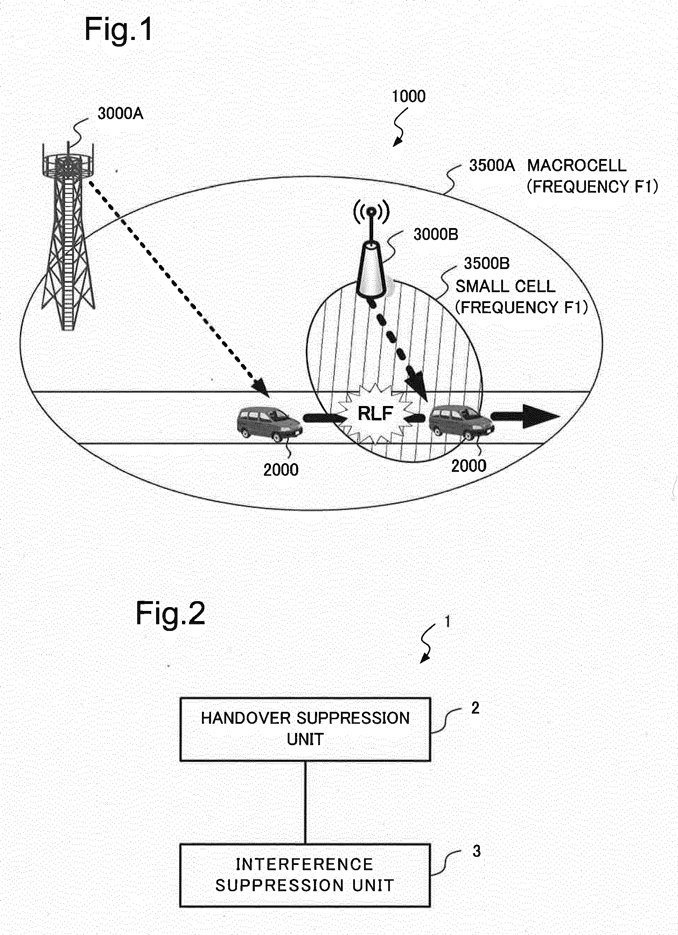

First, technical problems to be solved by the present exemplary embodiments will be described with reference to Fig. 1.

In the Third Generation Partnership Project (3GPP) for third generation (3G) mobile communication systems, heterogeneous networks (HetNet) have been standardized. HetNet increases the capacity of a radio network by off-loading radio traffic of macrocells to small cells, which have relatively small transmission power.

Fig. 1 illustrates an example in which a mobile terminal 2000 that is moving fast in a macrocell 3500A configured by a base station 3000A passes through a small cell 3500B configured by a base station 3000B in a HetNet environment.

When the mobile terminal 2000 passes through the small cell 3500B while handover from the cell 3500A to the cell 3500B is suppressed, the mobile terminal 2000 experience strong interference from the small cell 3500B. This is because the macrocell 3500A and the small cell 3500B use the same frequency F1.

Under the strong interference from the small cell 3500B, the mobile terminal 2000 becomes out of phase with the base station 3000A of the macrocell 3500A. If they remain in the out-of-phase state for a predetermined period of time or longer, Radio Link Failure (RLF) results.

For example, when an RLF determination timer (t310) in LTE is set to 2 seconds, which is the maximum value, a terminal that is moving at 60 km/h, i.e. 17 m/s, travels 34 m in the out-of-phase state, resulting in RLF.

Exemplary embodiments according to the present disclosure, in contrast, represent a technique that enables suppression of interference from a small cell to a mobile terminal for which handover is suppressed.

<Schematic Configuration of Radio Communication System>

Fig. 2 schematically illustrates an exemplary configuration of a radio communication system according to an exemplary embodiment of the present disclosure.

In Fig. 2, the radio communication system 1 of the present exemplary embodiment includes a handover suppression unit 2 and an interference suppression unit 3.

The handover suppression unit 2 suppresses handover of a mobile terminal from a first cell to a second cell on the basis of the speed of movement of the mobile terminal, the cell type of the first cell, and the cell type of the second cell.

The interference suppression unit 3 suppresses interference from the second cell to a mobile terminal for which handover is suppressed.

According to the present exemplary embodiment, interference from a small cell to a mobile terminal for which handover is suppressed can be suppressed. Consequently, when a mobile terminal connected to the first cell passes through the second cell, for example, throughput degradation and occurrence of RLF can be reduced.

<First Exemplary Embodiment>

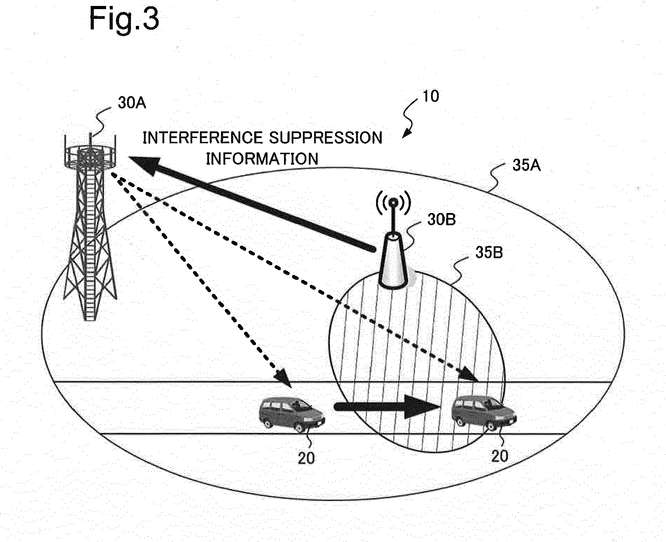

Fig. 3 illustrates a radio communication system according to a first exemplary embodiment.

In Fig. 3, a radio communication system 10 includes a base station 30A, a base station 30B, a mobile terminal 20, a cell 35A and a cell 35B.

The cell 35A belongs to the base station 30A and is configured by the base station 30A. The cell 35B belongs to the base station 30B and is configured by the base station 30B. The cell 35A is larger in cell size than the cell 35B. The mobile terminal 20 is a fast-moving terminal that is moving fast.

The base station 30B is configured to be capable of suppressing handover on the basis of a terminal type determined in accordance with a difference in the speed of movement of the mobile terminal 20 and the cell types of the cell 35A and the cell 35B that is the handover target of a mobile terminal 20.

Further, in order to reduce inter-cell interference between the cell 35A and the cell 35B after suppressing handover, the base station 30B activates Enhanced Inter Cell Interference Coordination (eICIC). Moreover, after suppressing handover, the base station 30B sends an ABS pattern to the base station 30A as information indicating a time interval in which the use of radio resources is suppressed in the cell 35B on the basis of eICIC. For sending the information, an X2 interface, for example, between the base station 30A and the base station 30B is used.

The base station 30A receives information indicating a time interval during which the use of radio resources in the cell 35B is suppressed. Based on the received information, the base station 30A performs communication allocation control (scheduling) to allocate communication of the mobile terminal 20 to the time interval.

For simplicity of explanation, it is assumed here that the cell 35A and the cell 35B use the same frequency for communication (frequency). In this case, communication between the mobile terminal 20 and the base station 30A experiences interference from the cell 35B.

According to the present exemplary embodiment, the interference is reduced and throughput degradation and RLF in the radio communication system 10 are reduced.

There is a problem that when an ABS request is made from a macrocell to a femto cell (small cell) as in PTL 2, a high processing load is placed on the base station that manages the macrocell, for example. Especially in an environment in which many small cells are provided in the area of a macrocell, a higher processing load is placed on the base station associated with the macrocell. According to the present embodiment, the processing load on the macrocell-side base station in such a case is reduced because processing for suppressing handover and processing for suppressing interference are performed on the small cell side.

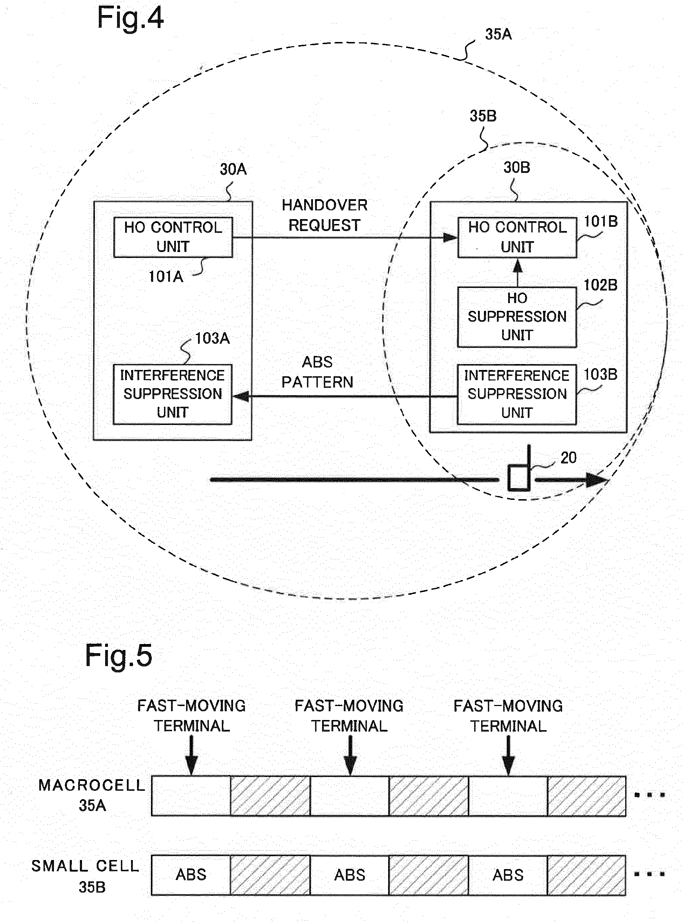

Fig. 4 illustrates a configuration of the first exemplary embodiment.

In Fig. 4, a base station 30A includes a HO control unit 101A and an interference suppression unit 103A. A base station 30B includes a HO control unit 101B, a HO suppression unit 102B, and an interference suppression unit 103B. Note that the directions of arrows in Fig. 4 are illustrative and do not limit the directions of signals between blocks.

The HO control unit 101A makes a request to the base station 30B for handover (HO).

In response to a HO request from the cell 35A, which is larger in cell size than the own cell 35B, the HO suppression unit 102B rejects the HO request if the mobile terminal 20 for which HO to be performed is a fast-moving terminal.

The interference suppression unit 103B sends interference suppression information (an ABS pattern) to the base station 30A through an inter-base-station interface (X2 interface).

The interference suppression unit 103A schedules communication of a mobile terminal 20 (a fast-moving terminal) for which HO is suppressed for a time (a time interval) in which interference from the cell 35B is suppressed, on the basis of interference suppression information received from the base station 30B.

An illustrative example of the embodiment described above will be given below.

<Illustrative Example>

1. The base station 30B is an LTE base station (an evolved Node B: eNB). When the base station 30B receives an HO request from a cell having a cell size greater than the cell of the base station 30B, the base station 30B rejects the HO request if the mobile terminal 20 for which HO is to be performed is a fast-moving terminal. For example, the base station 30B sends a HANDOVER PREPARATION FAILURE message to an HO requesting base station 30A to reject the HO request. The process will be detailed in (1) to (3) given below.

(1) The base station 30A sends a Handover Request message (HO Request) as a handover request.
(2) The base station 30B receives the HO request.
(3) When the base station 30B (the target eNB) receives a "UE History Information" information element (IE) in the received HO request, the base station 30B collects and stores a history of cell identification information (Global Cell IDs), the cell types, and the stay time concerning cells in which the terminal for which HO is to be performed has stayed in the past (cells in which the terminal has stayed before the cell 35B).
(4) The base station 30B determines the relation between cell sizes from a cell type (for example, very small, small, medium, or large) included in "UE History Information". For example, if the cell type of the cell of the base station 30B is "small" and the cell type of the cell of the HO requesting base station is "medium" or "large", the base station 30B determines that the HO request is made from a cell having a large cell size. Further, when the average value of stay time (Time UE stayed in Cell or

Time UE stayed in Cell Enhanced Granularity) is less than a predetermined value, the base station 30B may determine that the mobile terminal 20 for which HO is to be performed is a fast-moving terminal.
2. The base station 30B sends an ABS pattern to the base station 30A through an X2 interface. In addition, the mobile terminal 20 located in the cell 35B of the base station 30B is scheduled in a subframe other than an interference suppression time. Note that an ABS pattern may be a 40-bit sequence sent and received via an information element "ABS Pattern Info" included in ABS Information. The positions of "1" in the sequence represent the positions of ABS in a radio frame. Conditions for activating and deactivating the operation are as follows:

(Activation condition 1) Interference is always suppressed when HO is suppressed.

(Activation condition 2) Interference is suppressed when HO is suppressed only during a certain time period (for example commuting hours or an afternoon rush hour).

(Activation condition 3) The number of Too Late HOs is counted as events requesting reconnection to the cell of the base station 30B after RLF of a mobile terminal for which HO has been suppressed and, when the count value exceeds a predetermined value, interference is suppressed. Note that the rate of occurrence of Too Late HOs may be counted as well as the number of occurrence of Too Late HOs.

[Deactivation condition] The base station 30B acquires the ABS use rate (ABS Status) from the base station 30A and, if the ABS use rate is less than or equal to a predetermined value, interference suppression is deactivated and an ABS pattern that does not include ABS is sent to the base station 30A.

3. The base station 30A schedules communication of the mobile terminal 20 in the cell 35A for which HO to the base station 30B is suppressed for an interference suppression time (ABS) in accordance with the ABS pattern received from the base station 30B.

Fig. 5 is a diagram illustrating a frame configuration in the first exemplary embodiment.

As illustrated in Fig. 5, when ABS is set at a cell 35B, radio resources for a mobile terminal 20 (a fast-moving terminal) at the cell 35A are allocated to time intervals corresponding to the time intervals (subframes) in which ABS is set.

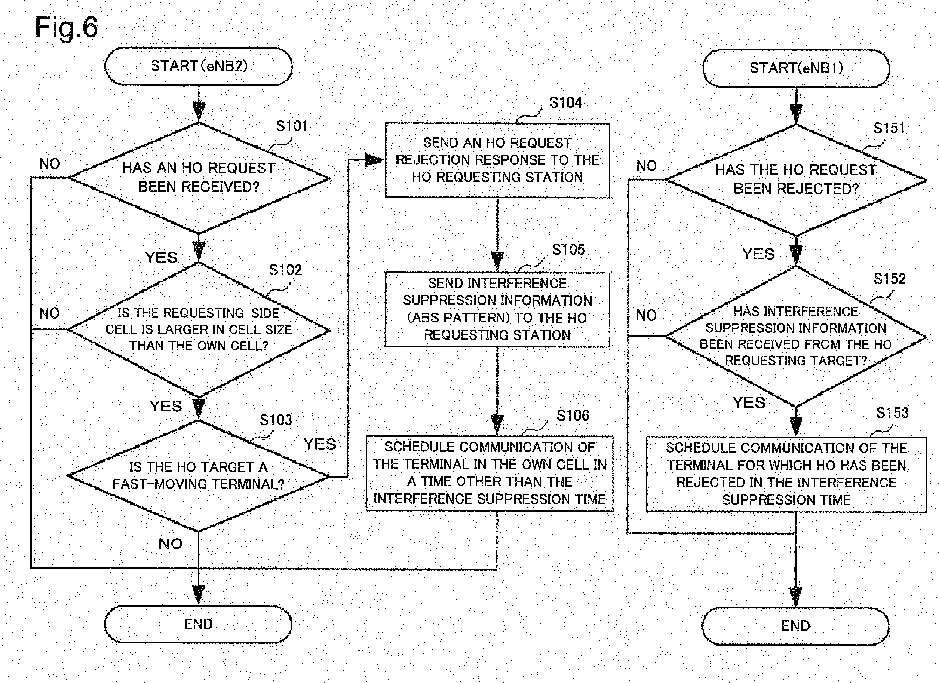

Fig. 6 is a diagram illustrating operations according to the first exemplary embodiment.

In Fig. 6, S101 is an operation of the HO control unit 101B. S102 to S104 are operations of the HO suppression unit 102B. S105 and S106 are operations of the interference suppression unit 103B. S151 is an operation of the HO control unit 101A. S152 and S153 are operations of the interference suppression unit 103A.

<Operation of Base Station 30B>

At S101, the HO control unit 101B determines whether or not a handover request has been received.

If "YES" at S101, the HO suppression unit 102B determines at S102 whether or not the cell size of the handover requesting side is greater than the cell size of its own cell.

If "YES" at S102, the HO suppression unit 102B determines at S103 whether or not the mobile terminal 20 for which handover is to be performed is a fast-moving terminal.

If "YES" at S103, a handover request rejection response is sent back to the HO requesting side (the base station 30A) at S104.

After sending the response at S104, the interference suppression unit 103B sends interference suppression information (an ABS pattern) to the HO requesting side (the base station 30A) at S105.

After sending the information at S105, the interference suppression unit 103B performs at S106 allocation (scheduling) of radio resources so that communication of the terminal located in its own cell is placed in a time other than the interference suppressing time (a frame other than ABS (a subframe)).

Note that if "NO" at S101, S102 and S103, the process ends.

<Operation of Base Station 30A>

At S151, determination is made as to whether or not a handover request rejection response sent at S104 has been received.

If "YES" at S151, determination is made at S152 as to whether or not interference suppression information (an ABS pattern) sent at S105 has been received.

If "YES" at S152, the base station 30A schedules communication of the mobile terminal 20 (communication between the mobile terminal 20 and the base station 30A) for which the HO request has been rejected for (allocates radio resources to) an interference suppressing time (a subframe indicated by ABS) at S153.

If "NO" at S151 and S152, the process ends.

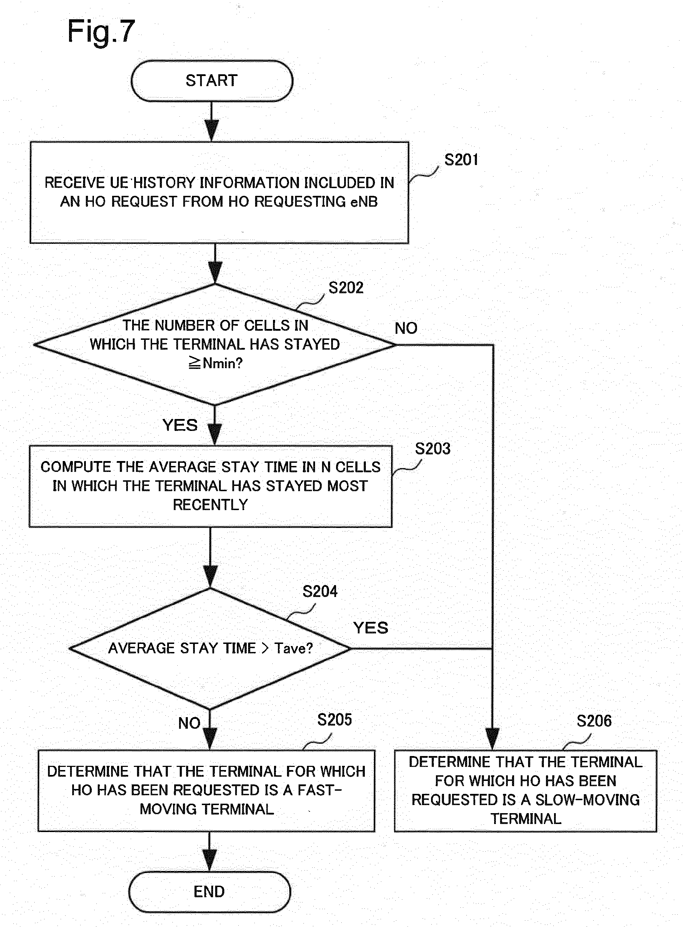

Fig 7 illustrates a method for identifying a fast-moving terminal in the first exemplary embodiment.

At S201 of Fig. 7, the base station 30B receives a HO request. The base station 30B receives a "UE History Information" information element (IE) in the received HO request.

At S202, the number of cells in which the mobile terminal has stayed in the past (cells preceding the cell of the base station 30A) is compared with a predetermine value (Nmin).

If the number of cells in which the terminal has stayed in the past is greater than or equal to the predetermined value (Nmin) (if "YES" at S202), the average stay time in N cells in which the terminal has stayed most recently is calculated at S203.

At S204, the calculated average stay time is compared with an average value of the cell stay time (Tave).

If the calculated average stay time is not greater than the average value of cell stay time (Tave) (if "NO" at S204), it is determined at S205 that the mobile terminal 20 for which HO is to be performed is a fast-moving terminal.

If "NO" at S202 or if "YES" at S204, it is determined at S206 that the mobile terminal 20 for which HO is to be performed is a slow-moving terminal.

In the foregoing, the first exemplary embodiment of the present invention has been described.

<Second Exemplary Embodiment>

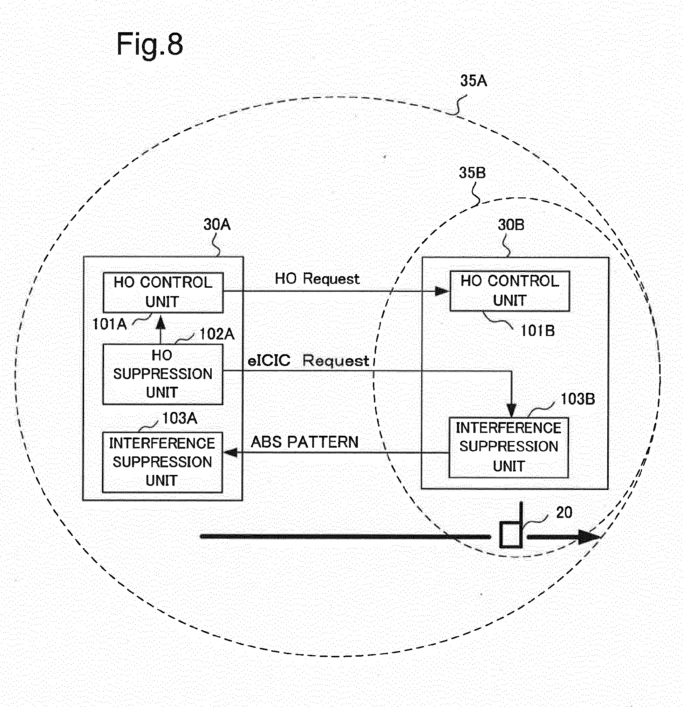

Fig. 8 illustrates a configuration of a second exemplary embodiment.

In Fig. 8, a base station 30A includes an HO control unit 101A, an HO suppression unit 102A, and an interference suppression unit 103A. A base station 30B includes an HO control unit 101B and an interference suppression unit 103B. Note that the directions of arrows in Fig. 8 are illustrative and do not limit the directions of signals between blocks.

The second exemplary embodiment differs from the first exemplary embodiment in the following respects. The base station 30A includes an HO suppression unit 102A. The HO suppression unit 102A is a means for requesting a cell 35B that is smaller in cell size than the cell 35A of the base station 30A to suppress interference and sends an interference suppression request (eICIC request). An interference suppression unit 103B of the cell 35B includes a means for receiving an interference suppression request (eICIC request) from the base station 30A of another cell.

Details of the exemplary embodiment described above will be given below, focusing on differences from the first exemplary embodiment.

<Detailed Description>

1. If a mobile terminal 20 connected to the own cell 35A is a fast-moving terminal, the HO suppression unit 102A suppresses HO to the cell 35B that is smaller in cell size than the own cell 35A and requests the cell 35B to suppress interference. The following (1) to (4) describe the details.

(1) The base station 30A determines whether or not the mobile terminal 20 connected to the own cell 35A is a fast-moving terminal.

(1-1) For example, the base station 30A includes a memory (not depicted) storing history information concerning cells in which the mobile terminal 20 connected to the own cell 35A has stayed in the past. As in the first exemplary embodiment described above, the history information includes information such as cell identification information (Global Cell ID), cell type, and the stay time. If the average value of cell stay time is less than or equal to a predetermined value, for example, the base station 30A determines that the mobile terminal 20 of interest is a fast-moving terminal.

(1-2) In another example, the base station 30A acquires, from the mobile terminal 20 of interest, information from an acceleration sensor of the mobile terminal 20, the time-series of information about the position of the mobile terminal 20, and information about the uplink Doppler frequency. The base station 30A uses the acquired information to determine whether or not the terminal of interest is a fast-moving terminal. For example, position information at each time instant is sent from the mobile terminal 20 to the base station 30A as the time series of position information by using the Global Positioning System (GPS). The base station 30A which has received the position information stores the position information at each predetermined time instant and analyzes changes in the position information to calculate the speed of movement of the mobile terminal 20. Based on the result of the calculation, determination is made as to whether or not the mobile terminal 20 is a fast-moving terminal.

(2) The base station 30A stores information about the cell type of another cell that the base station 30A has acquired when another terminal has performed handover to the own cell. Based on the stored cell type information, the base station 30A identifies the cell size of the other cell. Further, the base station 30A may identify the cell size of another cell by receiving the cell type or cell size of a handover target cell from a management device that manages cell identifiers (for example physical cell IDs (PCI)) and cell types (or cell sizes) in association with each other.

(3) When suppressing handover, the base station 30A sets a cell individual offset (CIO) for the cell to which handover is to be suppressed to a smaller value than usual and provides the value to the mobile terminal 20 to suppress the handover. When the small value is set on the mobile terminal 20, the mobile terminal 20 is prevented from sending a measurement report on the cell to which handover is to be suppressed (the handover target cell). This prevents the base station 30A from determining to perform handover based on a measurement report (thereby decreasing the frequency of handovers). Consequently, handover of the terminal to the cell 35B to which handover is to be suppressed can be suppressed.

In another example, the HO suppression unit 102A may instruct the HO control unit 101A to prevent the base station 30A from performing handover to a cell to which handover is to be suppressed. This can suppress handover. However, if the reception quality (radio frequency (RF) quality) of the cell 35A reported from the mobile terminal 20 in the cell 35A of the base station 30A is lower than a predetermined value, handover suppression may be omitted.

(4) An interference suppression request is made through an inter-base-station interface (an X2 interface). An interference suppression request may be made through an interface (an S1 interface) between a base station and a core network. Alternatively, the interference suppression request may be made through a management node in an element management system (EMS) or a network management system (NMS) which is connected to each base station and manages the base station.

Note that an interference suppression request may be made using a request message relating to enhanced inter-cell interference coordination (eICIC).

2. When the base station 30B receives the interference suppression request from the base station 30A, the base station 30B sends interference suppression information (an ABS pattern) to the requesting base station 30A through an inter-base-station interface (an X2 interface).

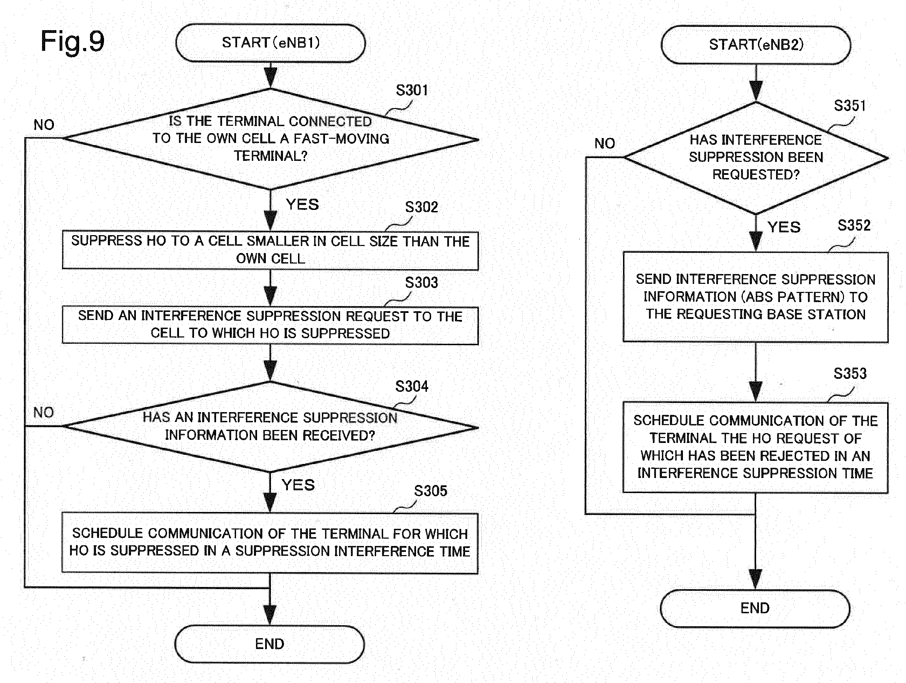

Fig. 9 illustrates an operation according to the second exemplary embodiment.

In Fig. 9, S301 to S303 are operations of the HO suppression unit 102A. S304 and S305 are operations of the interference suppression unit 103A. S351 to S353 are operations of the interference suppression unit 103B.

<Operation of Base Station 30A>

At S301, the HO suppression unit 102A determines whether or not a terminal (a mobile terminal 20) connected to the own cell 35A is a fast-moving terminal.

If "YES" at S301, the HO suppression unit 102A suppresses HO to the cell 35B that is smaller in cell size than the own cell 35A at S302.

At S303, the base station 30A sends an interference suppression request to the cell 35B to which HO is suppressed.

At S304, the interference suppression unit 103A determines whether or not interference suppression information has been received.

If "YES" at S304, the base station 30A schedules communication of the mobile terminal 20 (communication between the base station 30A and the mobile terminal 20) for which HO is suppressed for (allocates radio resources to) an interference suppressing time (a subframe indicated by an ABS) at S305.

If "NO" at S301 and S304, the process ends.

<Operation of Base Station 30B>

At S351, the interference suppression unit 103B determines whether or not interference suppression has been requested.

At S352, the interference suppression unit 103B sends interference suppression information (an ABS pattern) to the requesting base station.

At S353, the interference suppression unit 103B allocates (schedules) radio resources for communication of the terminal located in the own cell to a time other than an interference suppression time (a frame (subframe) other than an ABS).

If "NO" at S351, the process ends.

According to the second exemplary embodiment, occurrences of handover request messages can be suppressed and inter-base-station signaling can be reduced because a handover-source base station determines whether or not a handover request is needed to be sent.

Moreover, a base station 30 can determine whether or not HO suppression is required on the basis of information acquired from a terminal (information indicating speed, RF quality measurement information). Accordingly, inappropriate HO suppression as described in (1) or (2) below can be minimized.

(1) A slow-moving terminal repeating HO near a cell boundary is considered as a fast-moving terminal and HO suppression is applied to the terminal, thereby impairing the effect of off-loading to a small cell.
(2) In the own cell, HO of a fast-moving terminal that requires HO because of RF quality degradation is suppressed to cause RLF.

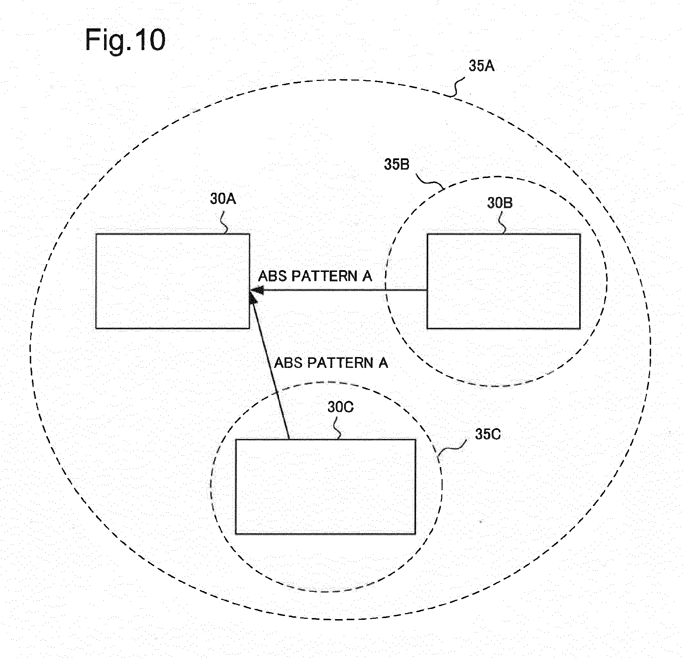

Fig. 10 is a diagram illustrating a configuration of a third exemplary embodiment. Note that the directions of arrows in Fig. 10 are illustrative and do not limit the directions of signals between blocks.

In Fig. 10, a radio communication system according to the third exemplary embodiment includes three or more base stations (30A, 30B, 30C, ...) and cells (35A, 35B, 35C, ...) configured by the respective base stations. In the present exemplary embodiment, the cell 35A includes a plurality of cells (35B, 35C, ...) having a small cell size. In this case, the base stations (30B, 30C, ...) of the individual cells included send an identical ABS pattern to the base station 30A.

According to the present exemplary embodiment, when the base station 30A schedules communication of a mobile terminal 20 for which HO is suppressed, the base station 30A follows only a single ABS pattern and accordingly the scheduling by the base station 30A is simplified.

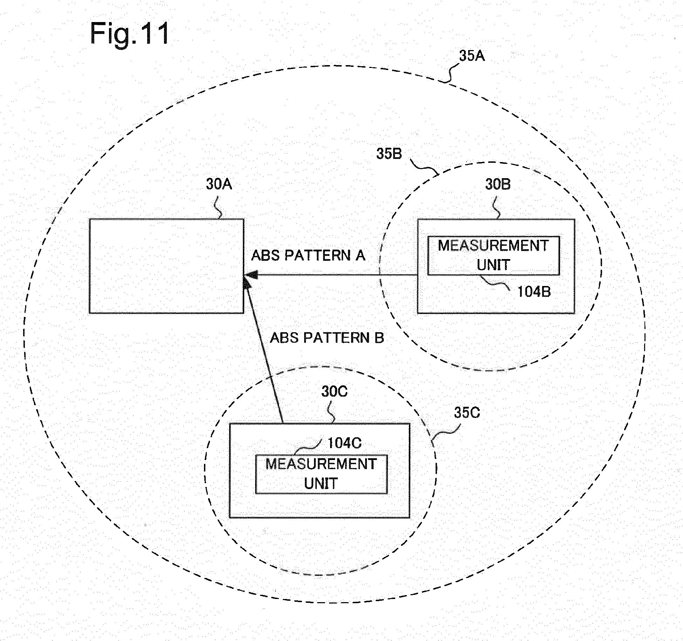

Fig. 11 illustrates a configuration of a fourth exemplary embodiment.

In Fig. 11, a radio communication system of the third exemplary embodiment includes three or more base stations (30A, 30B, 30C, ...) and cells (35A, 35B, 35C, ...) configured by the respective base stations. Note that the directions of arrows in Fig. 11 are illustrative and do not limit the directions of signals between blocks.

In the present exemplary embodiment, if the cell 35A includes a plurality of cells (35B, 35C, ...) having a small cell size, an ABS pattern is changed depending on the strength of radio frequency (RF) of the cell 35A measured at each base station that manages each individual cell included (ABS pattern A and ABS pattern B indicated in Fig. 11). The base station (30B, 30C, ...) of each individual cell included includes a measurement unit 104. The measurement unit 104 measures the RF strength of the cell 35A by using a measurement means such as network listening function. For example, when the measured RF strength is greater than or equal to a reference value (for example, when a mobile terminal is located near the center of the cell 35A), the base station 30B determines that the need for interference suppression is low. In this case, the base station 30B uses an ABS pattern in which the percentage of ABS is less than a predetermined value. On the other hand, when the RF strength is less than the reference value (for example, when a mobile terminal is located near an edge of the cell 35A), the base station 30B considers that the need for interference suppression is high and uses an ABS pattern in which the percentage of the ABS is greater than or equal to the predetermined value.

Then, the base station 30A determines an ABS pattern to be followed for scheduling on the basis of RF quality of a neighboring cell that is reported by the mobile terminal 20 in its own cell 35A. For example, the base station 30A follows an ABS pattern received from a neighboring cell with the strongest RF strength and schedules the mobile terminal 20 in ABS in the pattern. Alternatively, the base station 30A views ABS patterns from a plurality of neighboring cells with RF strength greater than or equal to a predetermined value and schedules the mobile terminal 20 in ABS common to the ABS patterns.

According to the present embodiment, the number of subframes that can be allocated to mobile terminals located in a call that has a low need for interference suppression can be increased.

<Fifth Exemplary Embodiment>

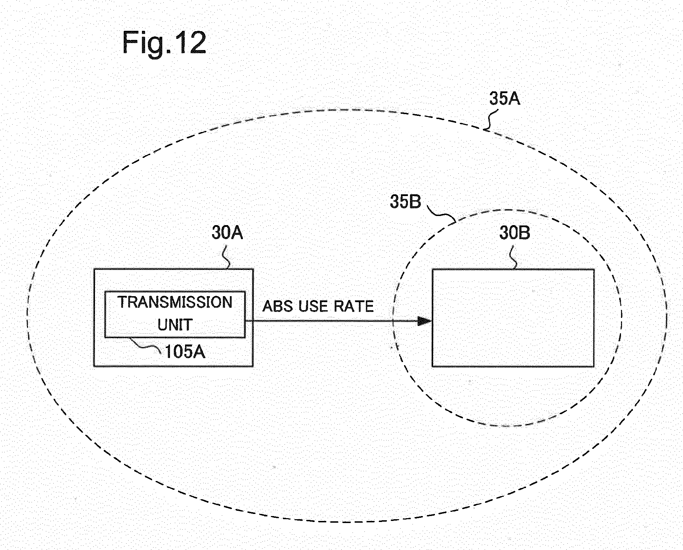

Fig. 12 is a diagram illustrating a configuration of a fifth exemplary embodiment. A base station 30A of the fifth exemplary embodiment includes a transmission unit 105A in addition to the components of the embodiments described above. Note that the directions of arrows in Fig. 12 are illustrative and do not limit the directions of signals between blocks.

According to the present exemplary embodiment, the transmission unit 105A of the base station 30A that is a handover source sends the ABS use rate (ABS status) at the base station 30A to a handover target base station 30B. The base station 30B adjusts the percentage of ABS so that the obtained ABS use rate (ABS status) falls within a predetermined range. For example, if "ABS use rate > predetermined value", the base station 30B increases the percentage of ABS. If "ABS use rate < predetermined value", the base station 30B decreases the percentage of ABS.

Note that the base station 30A allocates communication of a mobile terminal 20 in a time interval in which the use of radio resources in the cell 35B is suppressed. The percentage of time intervals actually used to allocate communication of mobile terminals 20 by the base station 30A among ABS time intervals reported from the base station 30B is called the ABS use rate.

The present exemplary embodiment can prevent a decrease of subframes in which resources can be allocated in the cell 35B (a decrease in cell use efficiency) due to excessive ABS reserved at the base station 30B, or failures to suppress interference due to ABS shortage at the base station 30A.

<Sixth Exemplary Embodiment>

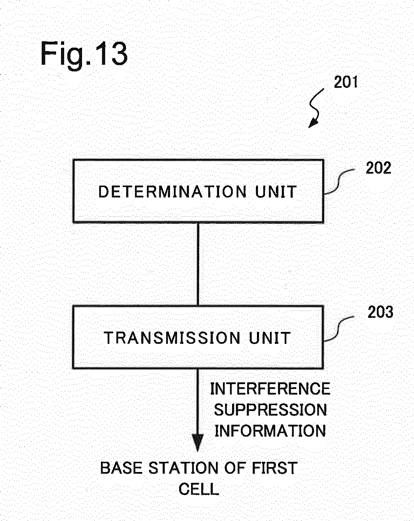

Fig. 13 illustrates an exemplary configuration of a sixth exemplary embodiment.

In Fig. 13, a radio communication system 201 according to the present exemplary embodiment includes a determination unit 202 and a transmission unit 203. Note that the directions of arrows in Fig. 13 are illustrative and do not limit the directions of signals between blocks.

The determination unit 202 determines to suppress handover of a mobile terminal from a first cell to a second cell on the basis of the speed of movement of the mobile terminal and the cell types of the first cell and the second cell.

After the determination by the determination unit 202, the transmission unit 203 sends information indicating a time interval in which the use of radio resources in the second cell is suppressed to the base station that manages the first cell.

According to the present exemplary embodiment, the base station that manages the first cell can obtain information indicating a time interval in which the use of radio resources is suppressed in the second cell (interference suppression information) after suppressing handover for a mobile terminal.

Consequently, the information can be used for reducing interference from the second cell to the base station. For example, the base station that manages the first cell can use the information for reducing interference.

The determination unit 202 and the transmission unit 203 may be provided in a single base station. The determination unit 202 may be provided at a first base station and the transmission unit 203 may be provided at a second base station. Alternatively, for example, the determination unit 202 and the transmission unit 203 may be provided at a node provided in a core network or may be provided in a control device (Element Management System (EMS) device) or the like that manages base stations.

<Other Embodiments>

In the foregoing descriptions of the exemplary embodiments, details of configurations have been given in which an ABS pattern, which is an example of interference suppression information, is provided from the base station of a small cell to the base station of a macrocell. The present invention is not limited to the configurations. For example, the base station of a macrocell and the base station of a small cell may store information concerning an ABS pattern in advance. In this case, control for suppressing interference is performed on the basis of the stored information concerning the ABS pattern as described in the exemplary embodiments given above.

In the exemplary embodiments described above, determination is made as to whether or not a mobile terminal 20 for which HO is to be performed is a fast-moving terminal. However, this operation may be omitted. For example, after S102 of Fig. 6, S103 may be skipped and the operation at S104 may be performed. Further, S301 of Fig. 9 may be skipped and the operation may be started from S302.

For simplicity of explanation, configurations in which a macrocell includes a small cell(s) is illustrated in the descriptions of the exemplary embodiment given above. However, the exemplary embodiments are not so limited and are also applicable to, for example, a configuration in which a macrocell overlaps a part of a cell smaller than the macrocell. Further, the exemplary embodiments are also applicable to a configuration in which, instead of a macrocell, a cell smaller than a macrocell includes a cell smaller than the small cell.

While the HO control unit, the HO suppression unit, and the interference suppression unit have been illustrated as different components in the foregoing descriptions of the exemplary embodiments, the HO control unit and the HO suppression unit, for example, may be incorporated together as a single determination unit or the interference suppression unit may be a transmission unit or a scheduler. These components can also be referred to as a processor.

Radio communication systems that is used in the exemplary embodiments described above are applicable to, but not limited to, a 3GPP LTE (Long Term Evolution), 3GPP W-CDMA (Wideband Code Division Multiple Access), GSM (registered trademark) (Global System for Mobile communication), WiMax (Worldwide interoperability for Microwave Access) and the like.

Some exemplary embodiments will be described herein with respect to mobile terminals (UE).

A mobile terminal can also be called a user terminal and may include all or some of functionality of a system, a subscriber unit, a subscriber station, a mobile station, a wireless terminal, a mobile device, a node, a device, a remote station, a remote terminal, a terminal, a wireless communication device, a wireless communication device, a wireless communication apparatus, or a user agent. A mobile terminal may be a cellular phone, a cordless phone, a session initiation protocol (SIP) phone, a smartphone, a wireless local loop (WLL) station, a personal digital assistant (PDA), a laptop, a tablet, a netbook, a smart book, a handheld communication device, a handheld computing device, a satellite radio, a wireless modem card and/or another processing device that communicates through a wireless system.

Various modes of base stations will be further described herein. A base station can be used for communication with one or more wireless terminals and may include some or all of the functionality of an access point, a node, an evolved node B (eNB) or some other network entity. A base station communicates with a UE through an air interface. The communication can occur through one or more sectors. A base station can act as a router between a UE and the rest of an access network which may include an Internet Protocol (IP) network by converting received air interface frames into IP packets. A base station can also adjust management of attributes for an air interface and may be a gateway between a wired network and a wireless network.

Further, the radio communication systems and the wireless communication terminals described above may be implemented by hardware, software or a combination of hardware and software. A method for controlling the communication system described above may be implemented by hardware, software or a combination of hardware and software. Implementation by software means implementation by a computer reading and executing a program.

The program may be stored using any of various types of non-transitory computer readable medium and can be provided to a computer. The non-transitory computer readable medium includes various types of tangible storage medium. Examples of the non-transitory computer readable medium include a magnetic recording medium (for example, a flexible disk, a magnetic tape, a hard disk drive), an magneto-optical recording medium (for example a magneto-optical disk), a CD-ROM (Compact Disc-Read Only Memory), a CD-R (Compact Disc-Recordable), a CD-R/W (Compact Disk-Rewritable), a DVD-ROM (Digital Versatile Disc-ROM), DVD-R (Digital Versatile Disc-Recordable), a DVD-R/W (Digital Versatile Disc-Rewritable), a semiconductor memory (for example, a mask ROM, a PROM (Programmable ROM), an EPROM (Erasable PROM), a flash ROM, and a RAM (Random Access Memory).

Further, the program may be provided to a computer via any of various types of transitory computer readable medium. Examples of the transitory computer readable medium include an electrical signal, an optical signal, and an electromagnetic wave. The transitory computer readable media can provide the program to a computer through a wired communication channel such as an electrical wireline, an optical fiber or the like, or a radio communication channel.

The embodiments described above can be implemented in combination as appropriate. The present invention is not limited to the exemplary embodiments described above and can be implemented in various modes.

(Supplementary Notes)

The whole or part of the exemplary embodiments disclosed above can also be described as in the following supplementary notes. However, the following supplementary notes are merely illustrative of the present invention and the present invention is not limited to the modes described in the supplementary notes.

(Supplementary Note 1)

A radio communication system including a mobile terminal and a base station which manages a cell to which the mobile terminal connects, and a function of controlling handover of the mobile terminal, the radio communication system including:

a handover suppression means for suppressing handover of the mobile terminal to another cell by taking into consideration a terminal type determined in accordance with a difference in the speed of movement and a cell type determined in accordance with a difference in cell size; and
an interference suppression means for suppressing radio interference from the other cell to the mobile terminal for which handover is suppressed.

(Supplementary Note 2)

The radio communication system according to Supplementary Note 1,
wherein the cell type includes a first cell type and a second cell type indicating a second cell larger in cell size than a first cell indicated by the first cell type.

(Supplementary Note 3)

The radio communication system according to Supplementary Note 1,
wherein the terminal type includes a first terminal type and a second terminal type indicating a second terminal that is moving faster than a first terminal indicated by the first terminal type.

(Supplementary Note 4)

The radio communication system according to Supplementary note 2 or 3,
wherein the cell is larger in cell size than the other cell; and
the handover suppression means suppresses handover of a mobile terminal of the second terminal type from the cell to the other cell.

(Supplementary Note 5)

The radio communication system according to Supplementary Note 4,
wherein the handover suppression means rejects a request for handover from the cell to the other cell.

(Supplementary Note 6)

The radio communication system according to Supplementary Note 4,
wherein the handover suppression means provides a parameter relating to handover to the mobile terminal connected to the cell, the parameter suppressing handover from the cell to the other cell.

(Supplementary Note 7)

The radio communication system according to Supplementary Note 1,
wherein the interference suppression means suppresses radio interference from the other cell when communication quality degrades due to suppression of handover to the other cell.

(Supplementary Note 8)

The radio communication system according to Supplementary Note 7,
wherein the interference suppression means suppresses radio interference from the other cell when the number of occurrences or the rate of occurrence of an event in which a mobile terminal for which handover is suppressed reconnects to the other cell after an abnormal disconnection of communication exceeds a predetermined value.

(Supplementary Note 9)

The radio communication system according to Supplementary Note 2 or 3,
wherein the cell is larger in cell size than the other cell; and
the interference suppression means suppresses the uses of a radio resource in a predetermined time interval at a base station that manages the other cell.

(Supplementary Note 10)

The radio communication system according to Supplementary Note 9,
wherein the interference suppression means allocates communication of a mobile terminal connected to the cell to the time interval while suppressing handover of the mobile terminal to the other cell.

(Supplementary Note 11)

The radio communication system according to Supplementary Note 10,
wherein the interference suppression means does not suppress the use of a radio resource in the time interval at the base station that manages the other cell when the percentage of use of the time interval at the base station that manages the cell is less than or equal to a predetermined value.

(Supplementary Note 12)

The radio communication system according to Supplementary Note 9,
wherein when there are a plurality of other cells to which the handover is to be suppressed, the interference suppression means suppresses the use of a radio resource in the same time interval at a base station that manages each of the other cells.

(Supplementary Note 13)

The radio communication system according to Supplementary Note 9,
wherein when there are a plurality of other cells to which the handover is to be suppressed, the interference suppression means determines a time interval in which the use of a radio resource is to be suppressed in accordance with received signal strength of the cell measured at a base station that manages each of the other cells.

(Supplementary Note 14)

The radio communication system according to Supplementary Note 10,
wherein when there are a plurality of other cells to which the handover is to be suppressed and time intervals in which the use of a radio resource is to be suppressed at base stations that manage the other cells differ from each other, the interference suppression means determines time intervals to which communication of the mobile terminal is to be allocated on the basis of radio qualities of the other cells that are reported by the mobile terminal for which the handover is to be suppressed.

(Supplementary Note 15)

The radio communication system according to Supplementary Note 9,
wherein the interference suppression means adjusts the percentage of a time interval in which the use of a radio resource is to be suppressed so that the percentage of use of the time interval at the base station that manages the cell falls within a predetermined range.

(Supplementary Note 16)

A radio communication system including a mobile terminal, a first cell and a second cell, the radio communication system including:

a determination unit which determines to suppress handover of the mobile terminal from the first cell to the second cell on the basis of the speed of movement of the mobile terminal and cell types of the first cell and the second cell; and
a transmission unit which, after the determination, sends information indicating a time interval in which the use of a radio resource in the second cell is suppressed to a base station that manages the first cell.

(Supplementary Note 17)

The radio communication system according to Supplementary Note 16, including an allocation means for allocating communication of the mobile terminal connected to the first cell to the time interval indicated by the information.

(Supplementary Note 18)

The radio communication system according to Supplementary Note 16 or 17, including a third cell,
wherein the determination unit determines to suppress handover of the mobile terminal to the second cell and the third cell; and
the use of a radio resource in the same time interval is suppressed in the second cell and the third cell.

(Supplementary Note 19)

The radio communication system according to Supplementary Note 16 or 17, including a third cell,
wherein a time interval in which the use of a radio resource is suppressed in the second cell is determined on the basis of received signal strength of the first cell measured in the second cell, and a time interval in which the use of a radio resource is suppressed in the third cell is determined on the basis of received signal strength of the first cell measured in the third cell.

(Supplementary Note 20)

The radio communication system according to any one of Supplementary Notes 16 to 19,
wherein the base station provides a parameter relating to handover for suppressing the handover to the mobile terminal connected to the first cell.

(Supplementary Note 21)

The radio communication system according to any one of Supplementary Notes 16 to 20, including a second base station that manages the second cell, wherein the second base station
detects the number of occurrences or the rate of occurrence of an event in which a mobile terminal for which the handover is suppressed reconnects to the second cell after an abnormal disconnection of communication, and
when the detected number of occurrences or rate of occurrence exceeds a predetermined threshold, avoids allocating communication with a mobile terminal located in the second cell to the time interval in which the use of a radio resource is suppressed.

(Supplementary Note 22)

The radio communication system according to any one of Supplementary notes 16 to 21,
wherein after the determination by the determination unit, the second base station determines whether or not the speed of movement of the mobile terminal is fast.

(Supplementary Note 23)

The radio communication system according to any one of Supplementary Notes 16 to 22,
wherein after the determination by the determination unit, the second base station compares the first cell with the second cell to determine whether or not the first cell is larger in cell size than the second cell.

(Supplementary Note 24)

The radio communication system according to any one of Supplementary Notes 16 to 23,
wherein after the determination by the determination unit, the second base station rejects the handover.

(Supplementary Note 25)

A base station configured to be able to communicate with a mobile terminal, the base station including:

a determination unit which determines to suppress handover of a mobile terminal that is communicating in the first cell and whose handover target is the second cell of the base station from a first cell to a second cell on the basis of the speed of movement of the mobile terminal and cell types of the first cell and the second cell; and
a transmission unit which, after the determination, sends information indicating a time interval in which the use of a radio resource in the second cell is suppressed to a base station that manages the first cell.

(Supplementary Note 26)

A communication method for a radio communication system including a mobile terminal, a first cell and a second cell, the communication method including:

determining to suppress handover of the mobile terminal from the first cell to the second cell on the basis of the speed of movement of the mobile terminal and cell types of the first cell and the second cell; and after the determination, sending information indicating a time interval in which the use of a radio resource in the second cell is suppressed to a base station that manages the first cell.

(Supplementary Note 27)

A program for causing a computer to execute a communication method for a base station configured to be able to communicate with a mobile terminal, the program causing the computer to execute the processes of:

determining to suppress handover of a mobile terminal that is communicating in the first cell and whose handover target is the second cell of the base station from a first cell to a second cell on the basis of the speed of movement of the mobile terminal and cell types of the first cell and the second cell; and after the determination, sending information indicating a time interval in which the use of a radio resource in the second cell is suppressed to a base station that manages the first cell.

This application is based upon and claims the benefit of priority from Japanese Patent Application No. 2014-184036, filed on September 10, 2014, the entire disclosure of which is incorporated herein.

[Reference Signs List]

1       Radio communication system
2       Handover suppression unit
3       Interference suppression unit
10      Radio communication system
20      Mobile terminal
30      Base station
35      Cell
101     HO control unit
102     HO suppression unit
103     Interference suppression unit
104     Measurement unit
105     Transmission unit
201     Radio communication system

| 202 | Determination unit |
|---|---|
| 203 | Transmission unit |
| 2000 | Mobile terminal |
| 3000 | Base station |
| 3500 | Cell |

**Claims**

1. A radio communication system comprising:

   a mobile terminal;
   a first cell;
   a second cell;
   a handover suppression unit configured to suppresses, based on a terminal type determined in accordance with a speed of movement of the mobile terminal and a cell type of the first cell and a cell type of the second cell, handover of the mobile terminal from the first cell to the second cell; and
   an interference suppression unit configured to suppresses interference from the second cell to the mobile terminal for which the handover is suppressed.

2. The radio communication system according to claim 1,
   wherein the first cell is larger in cell size than the second cell.

3. The radio communication system according to claim 1 or 2,
   wherein the terminal type includes a first terminal type and a second terminal type indicating a second terminal that is moving faster than a first terminal indicated by the first terminal type.

4. The radio communication system according to claim 1 or 3,
   wherein the handover suppression unit rejects a request for the handover from the first cell to the second cell.

5. The radio communication system according to any one of claims 1 to 4,
   wherein a base station managing the first cell provides the mobile terminal in the first cell with a parameter relating to handover for suppressing the handover.

6. The radio communication system according to any one of claims 1 to 5,
   wherein the interference suppression unit suppresses interference from the second cell to the mobile terminal when the handover of the mobile terminal to the second cell is suppressed, the mobile terminal is in the second cell, and the mobile terminal receives the interference from the second cell.

7. The radio communication system according to any one of claims 1 to 6, further comprising:

   a detection unit configured to detect a number indicating occurrence or a rate indicating occurrence of an event in which a mobile terminal reconnects to the second cell after an abnormal disconnection of communication of the mobile terminal for which the handover is suppressed, and
   wherein the interference suppression unit suppresses interference from the second cell when the number indicating occurrence or the rate indicating occurrence exceeds a predetermined threshold.

8. The radio communication system according to any one of claims 1 to 7, further comprising:

   a second base station managing the second cell,
   wherein the interference suppression unit controls the second base station to suppress a use of a radio resource in a predetermined time interval.

9. The radio communication system according to claim 8,
   wherein the second base station allocates, to the predetermined time interval, communication of a mobile terminal connected to the first cell, wherein the handover of the mobile terminal to the second cell is suppressed.

10. The radio communication system according to claim 8,
    wherein the interference suppression unit controls the base station managing the second cell not to suppress the use of the radio resource in the time interval when a rate of use of the time interval at a base station managing the first cell is less than or equal to a predetermined value.

11. The radio communication system according to claim 8, further comprising:

    a third cell; and
    a base station managing the third cell,
    wherein the interference suppression unit controls the base station managing the third cell to suppress a use of a radio resource in a same time interval as the predetermined time interval when the handover suppression unit suppresses handover of the mobile terminal from the first cell to the second cell and the third cell.

12. The radio communication system according to claim 8, further comprising:

a third cell; and
a base station managing the third cell, wherein, when the handover suppression unit suppresses handover of the mobile terminal from the first cell to the second cell and the third cell, a time interval in which a use of a radio resource is suppressed in the second cell is determined based on a received signal strength of the first cell measured in the second cell, and a time interval in which a use of a radio resource is suppressed in the third cell is determined based on a received signal strength of the first cell measured in the third cell.

13. A base station for a radio communication system comprising a mobile terminal, a first cell and a second cell, the base station comprising:

a handover suppression unit configured to suppresses, based on a speed of movement of the mobile terminal and a cell type of the first cell and a cell type of the second cell, handover of the mobile terminal from the first cell to the second cell, and
an interference suppression unit configured to suppresses interference from the second cell to the mobile terminal for which the handover is suppressed.

14. A communication method for a radio communication system comprising a mobile terminal, a first cell and a second cell, the method comprising:

suppressing, based on a terminal type determined in accordance with a speed of movement of the mobile terminal and a cell type of the first cell and a cell type of the second cell, handover of the mobile terminal from the first cell to the second cell, and
suppressing interference from the second cell to the mobile terminal for which the handover is suppressed.

15. A storage medium storing a program causing a computer to execute a method for a base station, the method comprising:

suppressing, based on a speed of movement of a mobile terminal configured to communicate with the base station and a cell type of a first cell and a cell type of a second cell, handover of the mobile terminal from the first cell to the second cell, and
suppressing interference from the second cell to the mobile terminal for which the handover is suppressed.

## Fig.1

3000A

1000

3500A MACROCELL (FREQUENCY F1)

3000B

3500B SMALL CELL (FREQUENCY F1)

RLF

2000

2000

## Fig.2

1

HANDOVER SUPPRESSION UNIT — 2

INTERFERENCE SUPPRESSION UNIT — 3

# Fig.3

30A

INTERFERENCE SUPPRESSION
INFORMATION

10

35A

30B

35B

20

20

## Fig.4

## Fig.5

# Fig.6

START(eNB2)

↓

**S101** HAS AN HO REQUEST BEEN RECEIVED?

NO →

YES ↓

**S102** IS THE REQUESTING-SIDE CELL IS LARGER IN CELL SIZE THAN THE OWN CELL?

NO →

YES ↓

**S103** IS THE HO TARGET A FAST-MOVING TERMINAL?

YES →

NO ↓

END

**S104** SEND AN HO REQUEST REJECTION RESPONSE TO THE HO REQUESTING STATION

↓

**S105** SEND INTERFERENCE SUPPRESSION INFORMATION (ABS PATTERN) TO THE HO REQUESTING STATION

↓

**S106** SCHEDULE COMMUNICATION OF THE TERMINAL IN THE OWN CELL IN A TIME OTHER THAN THE INTERFERENCE SUPPRESSION TIME

START(eNB1)

↓

**S151** HAS THE HO REQUEST BEEN REJECTED?

NO →

YES ↓

**S152** HAS INTERFERENCE SUPPRESSION INFORMATION BEEN RECEIVED FROM THE HO REQUESTING TARGET?

NO →

YES ↓

**S153** SCHEDULE COMMUNICATION OF THE TERMINAL FOR WHICH HO HAS BEEN REJECTED IN THE INTERFERENCE SUPPRESSION TIME

↓

END

EP 3 193 533 A1

# Fig.7

```
        ┌─────────────┐
        │    START    │
        └─────────────┘
               │
               ▼
┌──────────────────────────────────────┐   S201
│ RECEIVE UE HISTORY INFORMATION         │
│ INCLUDED IN AN HO REQUEST FROM HO      │
│ REQUESTING eNB                         │
└──────────────────────────────────────┘
               │
               ▼
        ╱────────────────╲   S202
       ╱  THE NUMBER OF    ╲        NO
      ╱   CELLS IN WHICH    ╲──────────────┐
      ╲  THE TERMINAL HAS   ╱              │
       ╲  STAYED ≧Nmin?    ╱               │
        ╲────────────────╱                │
               │ YES                       │
               ▼                           │
┌──────────────────────────────────┐  S203 │
│ COMPUTE THE AVERAGE STAY TIME IN   │      │
│ N CELLS IN WHICH THE TERMINAL HAS  │      │
│ STAYED MOST RECENTLY               │      │
└──────────────────────────────────┘       │
               │                           │
               ▼                           │
        ╱────────────────╲   S204          │
       ╱                   ╲      YES       │
      ╱   AVERAGE STAY      ╲───────────────┤
      ╲   TIME > Tave?      ╱               │
       ╲                   ╱                │
        ╲────────────────╱                 │
               │ NO                         │
               ▼                           ▼
┌──────────────────────┐ S205  ┌──────────────────────┐ S206
│ DETERMINE THAT THE    │       │ DETERMINE THAT THE    │
│ TERMINAL FOR WHICH HO │       │ TERMINAL FOR WHICH HO │
│ HAS BEEN REQUESTED IS │       │ HAS BEEN REQUESTED IS │
│ A FAST-MOVING TERMINAL│       │ A SLOW-MOVING TERMINAL│
└──────────────────────┘       └──────────────────────┘
               │
               ▼
        ┌─────────────┐
        │    END      │
        └─────────────┘
```

# Fig.8

## Fig.9

**START(eNB1)**

S301
IS THE TERMINAL CONNECTED TO THE OWN CELL A FAST-MOVING TERMINAL?

NO →

YES

S302
SUPPRESS HO TO A CELL SMALLER IN CELL SIZE THAN THE OWN CELL

S303
SEND AN INTERFERENCE SUPPRESSION REQUEST TO THE CELL TO WHICH HO IS SUPPRESSED

S304
HAS AN INTERFERENCE SUPPRESSION INFORMATION BEEN RECEIVED?

NO →

YES

S305
SCHEDULE COMMUNICATION OF THE TERMINAL FOR WHICH HO IS SUPPRESSED IN A SUPPRESSION INTERFERENCE TIME

**END**

---

**START(eNB2)**

S351
HAS INTERFERENCE SUPPRESSION BEEN REQUESTED?

NO →

YES

S352
SEND INTERFERENCE SUPPRESSION INFORMATION (ABS PATTERN) TO THE REQUESTING BASE STATION

S353
SCHEDULE COMMUNICATION OF THE TERMINAL THE HO REQUEST OF WHICH HAS BEEN REJECTED IN AN INTERFERENCE SUPPRESSION TIME

**END**

EP 3 193 533 A1

Fig.10

# Fig.11

35A

35B

30A

30B

ABS PATTERN A

MEASUREMENT
UNIT

104B

ABS PATTERN B

30C

35C

104C

MEASUREMENT
UNIT

Fig.12

# Fig.13

201

202

DETERMINATION UNIT

203

TRANSMISSION UNIT

INTERFERENCE
SUPPRESSION
INFORMATION

BASE STATION OF FIRST
CELL

## INTERNATIONAL SEARCH REPORT

| International application No. |
| --- |
| PCT/JP2015/004544 |

| A. CLASSIFICATION OF SUBJECT MATTER |
| --- |
| *H04W36/32*(2009.01)i, *H04W16/32*(2009.01)i, *H04W92/20*(2009.01)i |

According to International Patent Classification (IPC) or to both national classification and IPC

| B. FIELDS SEARCHED |
| --- |
| Minimum documentation searched (classification system followed by classification symbols)<br>H04W36/32, H04W16/32, H04W92/20 |

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| X<br><br>Y<br>A | WO 2013/012896 A1 (ALCATEL-LUCENT USA INC.),<br>24 January 2013 (24.01.2013),<br>page 18, lines 2 to 8; page 28, line 23 to page<br>29, line 6<br>& JP 2014-525199 A<br>paragraphs [0079], [0127] to [0128]<br>& US 2013/0023302 A1 & KR 10-2014-0027482 A<br>& CN 103907376 A | 1-3,5,8,9,<br>13-15<br>4,6,7,11,12<br>10 |
| Y<br>A | WO 2012/137293 A1 (Kyocera Corp.),<br>11 October 2012 (11.10.2012),<br>paragraph [0185]<br>& EP 2696625 A1<br>paragraph [0169]<br>& CN 103460758 A & KR 10-2013-0139340 A | 4<br>10 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>12 November 2015 (12.11.15) | Date of mailing of the international search report<br>24 November 2015 (24.11.15) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2015/004544

C (Continuation).  DOCUMENTS CONSIDERED TO BE RELEVANT

| Category* | Citation of document, with indication, where appropriate, of the relevant passages | Relevant to claim No. |
|---|---|---|
| Y<br>A | Samsung, Correction to X2 Information Exchange for Eicic[online], 3GPP TSG-RAN WG3#78 R3-122643, Internet<URL:http://www.3gpp.org/ftp/tsg_ran/WG3_Iu/TSGR3_78/Docs/R3-122643.zip>, 2012.11.16 | 6,11,12<br>10 |
| Y<br>A | JP 2013-118588 A  (Sumitomo Electric Industries, Ltd.),<br>13 June 2013 (13.06.2013),<br>paragraphs [0444] to [0449]<br>& WO 2013/084704 A1 | 7<br>10 |
| Y<br>A | JP 2014-107845 A  (Softbank Mobile Corp.),<br>09 June 2014 (09.06.2014),<br>paragraphs [0052] to [0054]<br>(Family: none) | 12<br>10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014034089 A
- WO 2013111889 A

- JP 2014184036 A

**Non-patent literature cited in the description**

- Mobile Speed Sensitive Handover in a Mixed Cell Environment. **K. IVANO ; G. SPRING.** IEEE VTC 1995. Siemens AG, 1995, 892-896